# EUROPEAN PATENT APPLICATION

(11) **EP 2 610 444 A2**
(43) Date of publication of application: **03.07.2013**
(21) Application number: 12186406.0
(22) Date of filing: 27.09.2012
(51) Int. Cl.: F01K 9/00, B01D 5/00, F03G 7/04, F01K 17/00

(54) **Condenser for axial flow exhaust type steam turbine and geothermal power plant having the same**

(30) Priority: 04.10.2011 JP 2011219956
(71) Applicant: Kabushiki Kaisha Toshiba, Tokyo (JP)
(72) Inventor: Kamihashi, Yuko, Minato-ku, Tokyo (JP); Sugimori, Yoichi, Minato-ku, Tokyo (JP)
(74) Representative: Granleese, Rhian Jane

(57) **Abstract**

According to the present invention, there is provided a condenser for an axial flow exhaust type steam turbine (1) having, a condenser unit (2) which condenses steam exhausted from the steam turbine as directly contacting cooling water from a spray nozzle (3), a cooling tower (4) which generates the cooling water as receiving and accumulating water condensed by the condenser unit, a water circulating pipe which supplies water condensed by the condenser unit to the cooling tower, a water return circulating pipe (5) which supplies the cooling water generated by the cooling tower to the condenser unit, and wherein a pump (8) is arranged at the water return circulating pipe.

## Description

### CROSS REFERENCE TO RELATED APPLICATION

This application is based upon and claims benefit of priority from the Japanese Patent Application No. 2011-219956, filed on October 4, 2011, the entire contents of which are incorporated herein by reference.

### BACKGROUND OF THE INVENTION

### FIELD OF THE INVENTION

The present invention relates to a condenser for an axial flow exhaust type steam turbine used in a geothermal power plant or the like and a geothermal power plant having such a condenser.

### RELATED ART

In a geothermal power plant, there is provided a condenser which collects condensate by cooling and condensing exhaust after a steam turbine is rotated by utilizing natural steam generated by geothermal heat. A direct-contact type in which cooling water is directly contacted to exhaust from the steam turbine is included in the condenser. Further, the direct-contact type condenser unit has a tray type and a spray type in which cooling water is contacted to exhaust by being directly sprayed by a spray.

The spray nozzle type includes a plurality of nozzles installed at appropriate positions in the condenser unit to splay circulating water with the spray nozzles in the condenser unit.

Each nozzle is required to ensure pressure necessary for the splaying. The pressure must be ensured even for a nozzle installed at the uppermost part.

Here, requiring pressure of a nozzle is indicated as following expression (1).

Nozzle requiring pressure = pressure difference (surface pressure in a cooling tower (atmospheric pressure) - inner pressure of a condenser unit (being lower than atmospheric pressure)) - pressure loss (at valves and piping) - static head difference (uppermost height for installing a spray nozzle of the condenser unit - a water surface level of the cooling tower) (1)

As described above, it is necessary for the installation height of the condenser unit and the cooling tower to consider the pressure difference between the surface pressure in the cooling tower and the inner pressure of the condenser unit, the pressure loss at piping and a control valve, and the static head difference between the spray nozzle height and the water surface level of the cooling tower.

In expression (1), the pressure difference between the inner pressure of the surface pressure in the cooling tower and the inner pressure of the condenser unit and the pressure loss at the piping and the control valve are determined by system designing. There arises a necessity to lower an installation position of the spray nozzle to ensure the nozzle requiring pressure in consideration of the static head difference between the uppermost height for installing the spray nozzle of the condenser unit and the water surface level of the cooling tower. As a result, there has been a problem that construction cost is increased owing to deepened excavation for the condenser unit.

Further, a conventional geothermal power plant mainly adopts a downward exhaust type to perform exhausting downward from a steam turbine. Therefore, it is not required to take measures to prevent a phenomenon that cooling water inflows from a water return circulating pipe to the steam turbine, that is, water induction. However, with the downward exhaust type, it is required to perform excavation for a condenser unit to a position being lower than the steam turbine, so that construction cost is increased.

Recently, to further lessen pressure loss from a final-stage blade outlet of a steam turbine to a condenser unit for reducing construction cost, an axial flow exhaust type to directly introduce exhaust from a rear side of the final-stage blade of the steam turbine is becoming popular for the condenser unit installed at the same level as the steam turbine which is an axial flow exhaust type.

In a case of adopting such an axial flow exhaust type, it is required to take measures for a level of water accumulated in the condenser unit, that is, a hot well level, to prevent occurrence of turbine water induction due to cooling water inflowing to the condenser unit until a control valve installed at a water return circulating pipe is fully closed when a water circulating pump is emergently stopped.

Specifically, the hot well level of the condenser unit must be set in consideration of an increasing level due to a cooling water inflow amount to the condenser unit from a lowermost vane level of the final-stage blade of the steam turbine.

Here, a higher water level of the cooling tower causes larger static head difference against the hot well level of the condenser unit, resulting in increase of the cooling water amount inflowing to the condenser unit during the time until the control valve is fully closed. In accordance with the above, necessary height for storing cooling water is increased, so that the hot well level is required to be lowered. Accordingly, there has been a problem that construction cost is increased due to deepened excavation for the condenser unit.

Japanese Patent Application Laid-Open No. 2001-193417 described below discloses a direct-contact type condenser for a conventional axial flow exhaust type steam turbine. The condenser prevents inflow of cooling water from a cooling tower to a condenser unit at the time of water circulating pump stopping and prevents water induction by forming a rising portion at a water return circulating pipe and connecting a siphon breaker having a branched pipe and a valve to the vicinity of a peek of the rising portion.

### SUMMARY OF THE INVENTION

However, the technology disclosed in Japanese Patent Application Laid-Open No. 2001-193417 which prevents water induction in a direct-contact type condenser for an axial flow exhaust type steam turbine cannot solve the problem of construction cost increase due to deepened excavation for a condenser unit to ensure nozzle requiring pressure.

To address the above issues, the present invention provides a condenser for an axial flow exhaust type steam turbine and a geothermal power plant capable of ensuring nozzle requiring pressure, reducing construction cost, and further, preventing water induction in the condenser for the axial flow exhaust type steam turbine.

According to one aspect of the present invention, there is provided a condenser for an axial flow exhaust type steam turbine comprising:
a condenser unit which condenses steam exhausted from the steam turbine as directly contacting cooling water from a spray nozzle;
a cooling tower which generates the cooling water as receiving and accumulating water condensed by the condenser unit;
a water circulating pipe which supplies water condensed by the condenser unit to the cooling tower;
a water return circulating pipe which supplies the cooling water generated by the cooling tower to the condenser unit; and
wherein a pump is arranged at the water return circulating pipe.

### BRIEF DESCRIPTION OF THE DRAWING

FIG. 1 is a layout diagram illustrating a structure of a condenser for an axial flow exhaust type steam turbine and a geothermal power plant according to a first embodiment of the present invention;
FIG. 2 is an explanatory view illustrating relation between hoisting height of a water circulating pump and height of a turbine building for the condenser for an axial flow exhaust type steam turbine and the geothermal power plant according to the first embodiment of the present invention;
FIG. 3 is a layout diagram illustrating a structure of a condenser for an axial flow exhaust type steam turbine and a geothermal power plant according to a second embodiment of the present invention; and
FIG. 4 is a layout diagram illustrating a structure of a condenser for an axial flow exhaust type steam turbine and a geothermal power plant according to a third embodiment of the present invention.

### DETAILED DESCRIPTION OF THE EMBODIMENTS

Hereafter, a condenser for an axial flow exhaust type steam turbine and a geothermal power plant according to embodiments of the present invention will be described with reference to the drawings.

### (First Embodiment)

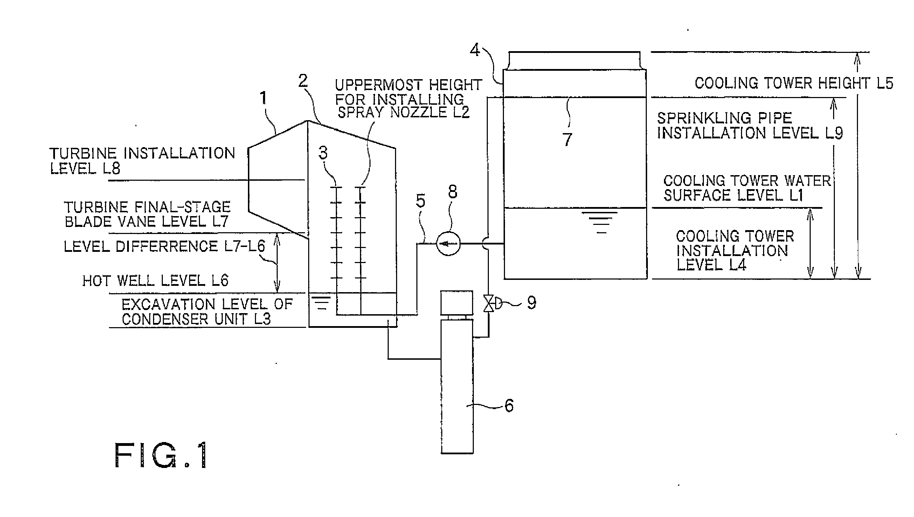

A condenser for an axial flow exhaust type steam turbine and a geothermal power plant having the same according to a first embodiment of the present invention will be described by using FIG. 1 illustrating a structure thereof.

Steam inflows to a steam turbine 1 from steam piping (not illustrated), and then, inflows to a condenser unit 2 being a splay direct-contact type as being exhausted after performing work at the steam turbine 1.

A spray nozzle 3 is arranged at the inside of the condenser unit 2 and cooling water supplied from a cooling tower 4 via a water return circulating pipe 5 is splayed and is directly contacted to steam. Accordingly, steam exhausted from the steam turbine 1 is condensed to be condensate and is accumulated at a lower part of the condenser unit 2 along with the cooling water.

The accumulated water is pressurized by a water circulating pump 6 and is fed to a cooling tower sprinkling pipe 7 which is installed to an upper part of the cooling tower 4 while a flow amount thereof is adjusted by a control valve 9. Then, the water is sprinkled and cooled with air-cooling and is accumulated at a lower part of the cooling tower 4.

The water accumulated at the cooling tower 4 is returned to the spray direct-contact type condenser unit 2 as cooling water via a pump 8 at the water return circulating pipe 5 as described later.

Here, as illustrated in FIG. 1, levels of the respective elements are indicated as follows.
L1: Water surface level of the cooling tower 4
L2: Uppermost height for installing the spray nozzle 3 at the inside of the condenser unit 2
L3: Installation level (excavation level) of the condenser unit 2
L4: Installation level of the cooling tower 4
L5: Maximum height of the cooling tower 4
L6: Hot well level of the condenser unit 2
L7: Final-stage blade vane level of the steam turbine 1
L8: Installation level (height of a rotary shaft) of the steam turbine 1
L9: Sprinkling pipe installation level of the cooling tower 4

Requiring pressure ΔP1 of the spray nozzle 3 is indicated as following expression (2) based on abovementioned expression (1).

ΔP1 = pressure difference (surface pressure in the cooling tower (atmospheric pressure) - inner pressure of the condenser unit (being lower than atmospheric pressure)) - pressure loss (at valves and piping) - static head difference ΔP2 (L2 (uppermost height for installing the spray nozzle of the condenser unit) - L1 (water surface level of the cooling tower)) (2)

The first embodiment is characteristic in installing the pump 8 to the water return circulating pipe 5 for assisting to ensure the requiring pressure ΔP1 of the spray nozzle 3 in expression (2). With the above, since the requiring pressure ΔP1 is not necessarily satisfied by the static head difference AP2, following effects can be obtained.
i) Owing to exclusion of necessity to lower the installation height L2 of the spray nozzle of the condenser unit 2 and to lower the installation level (excavation level) L3 of the condenser unit 2 accordingly in consideration of the static head difference ΔP2, construction cost can be reduced.

Alternatively, owing to exclusion of necessity to heighten the installation level L4 of the cooling tower 4 or the height L5 of the cooling tower 4 for heightening the water surface level L1 of the cooling tower 4 in consideration of the static head difference ΔP2, limitation due to the static head difference ΔP2 is excluded and construction cost can be reduced.
ii) It becomes possible to lessen the static head difference ΔP2. Accordingly, a flow amount of cooling water inflowing from the cooling tower 4 to the condenser unit 2 until the control valve 9 is fully-closed is decreased. As a result, water induction can be prevented even when level difference (L7-L6) between the final-stage blade vane level L7 of the steam turbine 1 and the hot well level L6 of the condenser unit 2 is set small.

With the above, it becomes possible to heighten the installation level (excavation level) L3 of the condenser unit 2, that is, to lessen an excavation amount or to lower the installation level L8 of the steam turbine 1. Accordingly, following effects can be obtained.
a) Since the excavation level L3 of the condenser unit 2 can be heightened by heightening the hot well level L6 of the condenser unit 2, an effect to reduce construction cost can be obtained.

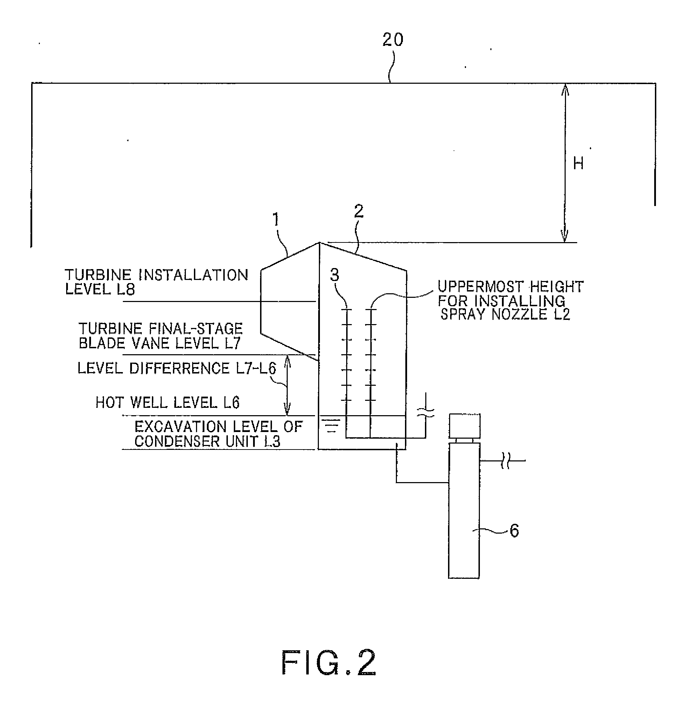

b) FIG. 2 illustrates a state that the steam turbine 1, the condenser unit 2, and the water circulating pump 6 are installed in a turbine building 20. In a case of a failure, it is necessary to hoist and convey the water circulating pump 6 in the turbine building 20 with a crane or the like. In a case that the water circulating pump 6 is installed indoors along with the steam turbine 1 as described above, it is required to determine height of the turbine building 20 in consideration of hoisting height when the water circulating pump 6 fails and allowable height H of a conveyance route to pass above equipment existing with the maximum height in the turbine building 20.

As illustrated in FIG. 2, in a case that the equipment with the maximum height in the turbine building 20 is auxiliary to the steam turbine 1, for example, as being a turbine casing which covers the steam turbine 1 and the condenser unit 2 in an integrated manner, a phase separation generating line between a generator (not illustrated) and the steam turbine 1, or the like, an effect to reduce construction cost can be obtained as lowering the height of the entire building by lowering the Installation level L8 of the steam turbine 1.

As described in above a), owing to installing the pump 8 to the water return circulating pipe 5, the hot well level L6 of the condenser unit 2 can be heightened.

Accordingly, the static head difference against the cooling tower sprinkling pipe 7 which is installed to the upper part of the cooling tower 4 becomes small and pump head of the water circulating pump 6 can be lessened. Further, as described in above i), since the height L5 of the cooling tower 4 is not required to be heightened, the installation level L9 of the cooling tower sprinkling pipe 7 is not heightened accordingly and pump head of the water circulating pump 6 can be lessened. Therefore, construction cost can be reduced.

### (Second Embodiment)

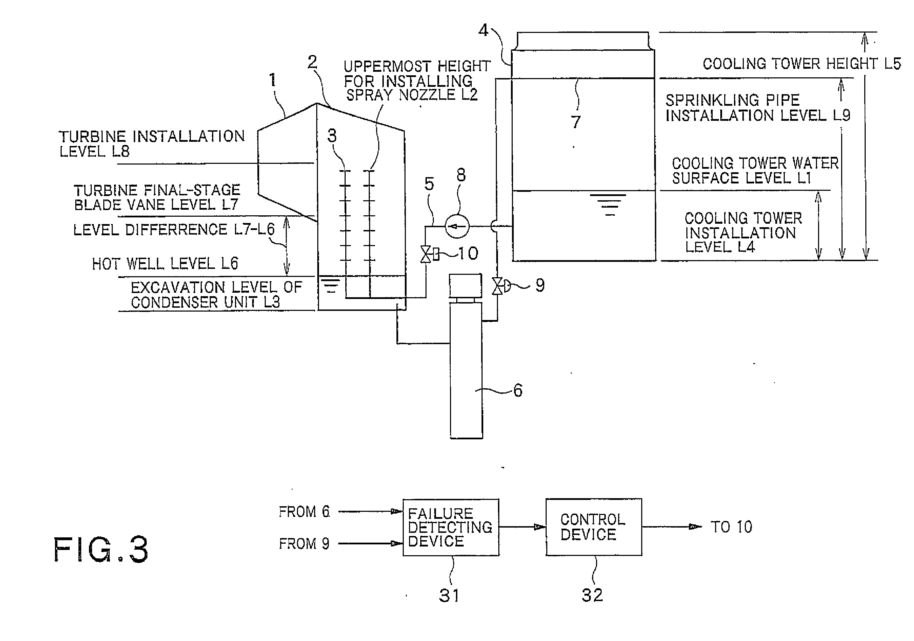

A condenser for an axial flow exhaust type steam turbine and a geothermal power plant having the same according to a second embodiment of the present invention will be described by using FIG. 3 illustrating a structure thereof. Here, the same numeral is given to the same structural element as in the first embodiment illustrated in FIG. 1 and redundant description will not be repeated.

In addition to the structure of the first embodiment, the second embodiment has difference therefrom in further including a hydraulic or pneumatic shut-off valve 10 as well as the pump 8 at the water return circulating pipe 5. Being related to the shut-off valve 10, a failure detecting device 31 and a control device 32 are provided.

The failure detecting device 31 detects a failure in a case that either or both of the water circulating pump 6 and the control valve 9 fall. When the failure detecting device 31 detects the failure, the control device 32 controls the shut-off valve 10 to be closed.

With the above, in a case that the water circulating pump 6 fails, that the control valve 9 becomes incapable of adjusting a flow amount, or that the hot well level L6 is raised with failures of the water circulating pump 6 and the control valve 9, inflow of circulating water from the cooling tower 4 to the condenser unit 2 can be immediately shut-off by closing the shut-off valve 10 installed at the water return circulating pipe 5. Accordingly, water induction can be prevented even when difference between the installation level L8 of the turbine 1 and the hot well level L6 which is regulated by the inflow amount of circulating water to the condenser unit 2 is set small. Thus, as described in the first embodiment, construction cost can be reduced by heightening the excavation level L3 of the condenser unit 2 as heightening the hot well level L6.

### (Third Embodiment)

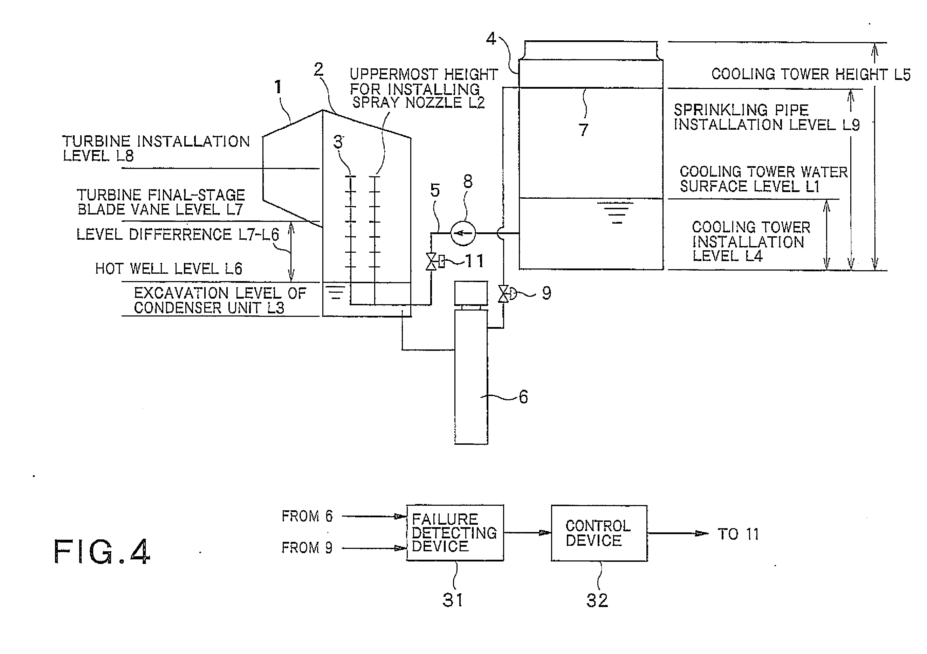

A condenser for an axial flow exhaust type steam turbine and a geothermal power plant having the same according to a third embodiment of the present invention will be described by using FIG. 4 illustrating a structure thereof. Here, the same numeral is given to the same structural element as in the first embodiment illustrated in FIG. 1 and redundant description will not be repeated.

The third embodiment differs from the second embodiment 2 in that a control valve 11 is arranged at the water return circulating pipe 5 instead of the shut-off valve 10. Being related to the control valve 11, a failure detecting device 31 and a control device 32 are provided.

The failure detecting device 31 detects a failure in a case that either or both of the water circulating pump 6 and the control valve 9 fail. When the failure detecting device 31 detects the failure, the control device 32 controls adjustment of a flow amount at the control valve 11.

In a case that the water circulating pump 6 fails or that the hot well level L6 is raised with incapability of flow amount adjusting by the control valve 9, an inflow amount of circulating water to the condenser unit 2 can be regulated by controlling adjustment of the flow amount at the control valve 11 installed at the water return circulating pipe 5 instead of the shut-off valve 10. The above reduces difference between the installation level L8 of the steam turbine 1 and the hot well level L6 which is regulated by the inflow amount of circulating water to the condenser unit 2, that is, required height for storage of cooling water. Accordingly, water induction can be prevented even when the difference between the levels L6 and L8 is set small.

Thus, since the excavation level L3 of the condenser unit 2 is not required to be lowered owing to needlessness of lowering the hot well level L6, construction cost can be reduced.

While certain embodiments have been described, these embodiments have been presented by way of example only, and are not intended to limit the scope of the present invention. Indeed, the novel systems described herein may be embodied in a variety of other forms; furthermore, various omissions, substitutions and changes in the form of the systems described herein may be made without departing from the spirit of the inventions. The accompanying claims and their equivalents are intended to cover such forms or modifications as would within the scope and the spirit of the present inventions.

## Claims

1. A condenser for an axial flow exhaust type steam turbine comprising:
a condenser unit which condenses steam exhausted from the steam turbine as directly contacting cooling water from a spray nozzle;
a cooling tower which generates the cooling water as receiving and accumulating water condensed by the condenser unit;
a water circulating pipe which supplies water condensed by the condenser unit to the cooling tower;
a water return circulating pipe which supplies the cooling water generated by the cooling tower to the condenser unit; and
wherein a pump is arranged at the water return circulating pipe.

2. The condenser for an axial flow exhaust type steam turbine according to claim 1,
wherein the pump causes a value which is obtained by subtracting static head difference between upper most height for installing a spray nozzle of the condenser unit and a water surface level of the cooling tower from pressure difference between surface pressure in the cooling tower and inner pressure of the condenser unit to satisfy requiring pressure of the spray nozzle.

3. The condenser for an axial flow exhaust type steam turbine according to claim 1 or claim 2,
wherein a valve capable of shutting-off is further arranged at the water return circulating pipe.

4. The condenser for an axial flow exhaust type steam turbine according to claim 1 or claim 2,
wherein a first control valve to adjust a flow amount is further arranged at the water return circulating pipe.

5. The condenser for an axial flow exhaust type steam turbine according to claim 3, further comprising:
a water circulating pump which supplies water condensed by the condenser unit to the cooling tower as being arranged at the water circulating pipe;
a second control valve which adjusts a flow amount of water condensed by the condenser unit;
a failure detecting device which detects a failure of each of the water circulating pump and the second control valve; and
a control device which closes the valve capable of shutting-off when a failure of either or both of the water circulating pump and the second control valve is detected by the failure detecting device.

6. The condenser for an axial flow exhaust type steam turbine according to claim 4, further comprising:
a water circulating pump which supplies water condensed by the condenser unit to the cooling tower as being arranged at the water circulating pipe;
a second control valve which adjusts a flow amount of water condensed by the condenser unit;
a failure detecting device which detects a failure of each of the water circulating pump and the second control valve; and
a control device which adjusts a flow amount at the water return circulating pipe with the first control valve when a failure of either or both of the water circulating pump and the second control valve is detected by the failure detecting device.

7. A geothermal power plant, comprising:
the condenser for an axial flow exhaust type steam turbine according to any one of claims 1 to 6;
the steam turbine which receives steam and which exhausts work-performed steam to the condenser; and
a generator which generates power as receiving rotational energy from the steam turbine.
